# EUROPEAN PATENT APPLICATION

(11) **EP 2 988 495 A1**
(43) Date of publication of application: **24.02.2016**
(21) Application number: 13888027.3
(22) Date of filing: 28.06.2013
(51) Int. Cl.: H04N 7/173, H04N 7/08

(54) **DATA PRESENTATION METHOD, TERMINAL AND SYSTEM**

(71) Applicant: Huawei Technologies Co., Ltd., Longgang District Shenzhen, Guangdong 518129 (CN)
(72) Inventor: LIAN, Zhihong, Shenzhen, Guangdong 518129 (CN); MU, Chao, Shenzhen, Guangdong 518129 (CN)
(74) Representative: Thun, Clemens
(86) International application number: PCT/CN2013/078319
(87) International publication number: WO 2014/205761

(57) **Abstract**

The present invention discloses a data presentation method, including: when video data is playing, receiving a triggering instruction for pausing or stopping; acquiring a relative playback time point at which the video data is playing when the triggering instruction is received; acquiring at least one piece of advertisement data that includes the relative playback time point and is associated with the video data; and superimposing, on a page of video data corresponding to the relative playback time point, prompt information of the acquired at least one piece of advertisement data. According to the data presentation method provided in the embodiments of the present invention, to-be-presented advertisement data and video data are separated, which avoids operation complexity caused by synthesizing the advertisement data and the video data. In addition, multiple pieces of advertisement data can be presented at a same moment.

## Description

### TECHNICAL FIELD

The present invention relates to the field of communications technologies, and in particular, to a data presentation method, terminal, and system.

### BACKGROUND

For product placement in a video, in a video shooting process, generally, a to-be-advertised product itself or its logo needs to be used as a prop or a background in the video in some scenarios. This mode makes it difficult for the product to gain enough attention as audiences often immerse themselves in plots and ignore the advertised product.

When advertisements are inserted before video playback, after video playback, or by means of video pause in a video playback process, users often reject these advertisements and skip these advertisements as possible as they can.

Currently, an instant interactive advertisement occurs. When a movie is played or paused, a user may use a mouse to click on a hotspot area in a video image, and the hotspot area presents related advertisement information. In this mode, video content and an advertisement are closely associated, which stimulates passion of a user for further exploring of video-related information. Currently, video advertisements in this mode have started to develop gradually, and this mode replaces the foregoing two video modes.

Currently, instant interactive video advertisements primarily have two categories of modes: One category is using a video tracking technology to produce an advertisement, that is, using the video tracking technology to find out video data related to the advertisement, and then synthesizing advertisement data and the video data related to the advertisement; and the other category of mode of interactive video advertisements is that an advertisement producer configures corresponding advertisement data according to content of video data, and synthesizes the video data and an advertisement file during post production.

The inventor of the present invention finds that current interactive video advertisements are all processed in a manner of synthesizing video data and advertisement data, which undoubtedly increases operation complexity.

### SUMMARY

Embodiments of the present invention provide a data presentation method, where to-be-presented advertisement data and video data are separated, which avoids operation complexity caused by synthesizing the advertisement data and the video data. The embodiments of the present invention further provide a corresponding terminal and system.

A first aspect of the present invention provides a data presentation method, including:
when video data is played, receiving a triggering instruction for pausing or stopping;
acquiring a relative playback time point at which the video data is played when the triggering instruction is received;
acquiring at least one piece of advertisement data that includes the relative playback time point and is associated with the video data; and
superimposing, on a page of video data corresponding to the relative playback time point, prompt information of the acquired at least one piece of advertisement data.

With reference to the first aspect, in a first possible implementation manner, the method further includes:
receiving a selection instruction, input by a user, for prompt information of specified advertisement data in the prompt information of the at least one piece of advertisement data; and
presenting, according to the selection instruction, extension information of advertisement data corresponding to the prompt information of the specified advertisement data.

With reference to the first possible implementation manner of the first aspect, in a second possible implementation manner, the method further includes:
receiving a selection instruction, input by the user, for a link to specified scene data, where the link to the specified scene data is included in the extension information of the advertisement data; and
switching, according to the selection instruction for the link to the specified scene data, the video data to the scene data corresponding to the link.

With reference to the first aspect, or the first or second possible implementation manner of the first aspect, in a third possible implementation manner, the superimposing prompt information of the acquired at least one piece of advertisement data specifically includes:
superimposing and presenting the prompt information of the at least one piece of advertisement data; or
superimposing the prompt information of the at least one piece of advertisement data; and when an operation focus of the user is located on the prompt information of the advertisement data, presenting the prompt information, on which the operation focus is located, of the advertisement data.

A second aspect of the present invention provides a data presentation method, including:
acquiring a relative playback time point, of each piece of advertisement data, in a playback process of video data that starts playing, where each piece of advertisement data and the video data are separately stored, and each piece of advertisement data and the video data are associated by using the relative playback time point of each piece of advertisement data;
acquiring, when the video data is played at any relative playback time point in the relative playback time points, at least one piece of advertisement data, associated with the video data, at the any relative playback time point; and
superimposing, on a page of the video data, prompt information of the at least one piece of advertisement data when the video data is played.

With reference to the second aspect, in a first possible implementation manner, before the step of acquiring a relative playback time point, of each piece of advertisement data, in a playback process of video data that starts playing, the method further includes:
downloading from a server and storing the video data and each piece of advertisement data;
correspondingly, the acquiring a relative playback time point, of each piece of advertisement data, in a playback process of video data that starts playing includes:
   acquiring the relative playback time point of each piece of advertisement data from the stored each piece of advertisement data; and
   correspondingly, the acquiring, when the video data is playing at any relative playback time point in the relative playback time points, at least one piece of advertisement data, associated with the video data, at the any relative playback time point includes:
when the video data is playing at the any relative playback time point, acquiring, from the stored each piece of advertisement data, at least one piece of advertisement data, associated with the video data, at the any relative playback time point.

With reference to the second aspect, in a second possible implementation manner, before the step of acquiring a relative playback time point, of each piece of advertisement data, in a playback process of video data that starts playing, the method further includes:
downloading the video data from a server;
correspondingly, the acquiring a relative playback time point, of each piece of advertisement data, in a playback process of video data that starts playing includes:
   acquiring, from the server, the relative playback time point, of each piece of advertisement data, in the playback process of the video data that starts playing; and
   correspondingly, the acquiring, when the video data is played at any relative playback time point in the relative playback time points, at least one piece of advertisement data, associated with the video data, at the any relative playback time point includes:
   when the video data is played at the any relative playback time point, acquiring, from the server, at least one piece of advertisement data, associated with the video data, at the any relative playback time point.

With reference to the second aspect, or the first or second possible implementation manner of the second aspect, in a third possible implementation manner, the method further includes:
when playback of the video data is paused or stopped, acquiring some or all advertisement data that is associated with the video data; and
superimposing, in a mosaic form on a page of video data corresponding to the pause or stop moment, prompt information of the some or all advertisement data.

With reference to the third possible implementation manner of the second aspect, in a fourth possible implementation manner, the method further includes:
receiving a selection instruction, input by a user, for prompt information of specified advertisement data in the prompt information of the some or all advertisement data; and
presenting, according to the selection instruction, extension information of advertisement data corresponding to the prompt information of the specified advertisement data.

With reference to the fourth possible implementation manner of the second aspect, in a fifth possible implementation manner, the method further includes:
receiving a selection instruction, input by the user, for a link to specified scene data, where the link to the specified scene data is included in the extension information of the advertisement data; and
switching, according to the selection instruction for the link to the specified scene data, the video data to the scene data corresponding to the link.

With reference to the second aspect, or any one of the first to fifth possible implementation manners of the second aspect, in a sixth possible implementation manner, the superimposing, on a page of the video data, prompt information of the at least one piece of advertisement data specifically includes:
superimposing and presenting the prompt information of the at least one piece of advertisement data; or
superimposing the prompt information of the at least one piece of advertisement data; and when an operation focus of the user is located on the prompt information of the advertisement data, presenting the prompt information, on which the operation focus is located, of the advertisement data.

A third aspect of the present invention provides a terminal, including:
a first receiving unit, configured to: when video data is played, receive a triggering instruction for pausing or stopping;
a first acquiring unit, configured to acquire a relative playback time point at which the video data is played when the first receiving unit receives the triggering instruction;
a second acquiring unit, configured to acquire at least one piece of advertisement data that includes the relative playback time point acquired by the first acquiring unit and is associated with the video data; and
a first superimposing unit, configured to superimpose, on a page of video data corresponding to the relative playback time point, prompt information of the at least one piece of advertisement data acquired by the second acquiring unit.

With reference to the third aspect, in a first possible implementation manner,
the first receiving unit is further configured to receive a selection instruction, input by a user, for prompt information of specified advertisement data in the prompt information of the at least one piece of advertisement data; and
the terminal further includes:
a first presentation unit, further configured to present, according to the selection instruction received by the first receiving unit, extension information of advertisement data corresponding to the prompt information of the specified advertisement data.

With reference to the first possible implementation manner of the third aspect, in a second possible implementation manner,
the first receiving unit is further configured to receive a selection instruction, input by the user, for a link to specified scene data, where the link to the specified scene data is included in the extension information of the advertisement data; and
the terminal further includes:
a first switching unit, configured to switch, according to the selection instruction for the link to the specified scene data that is received by the first receiving unit, the video data to the scene data corresponding to the link.

A fourth aspect of the present invention provides a terminal, including:
a third acquiring unit, configured to acquire a relative playback time point, of each piece of advertisement data, in a playback process of video data that starts playing, where each piece of advertisement data and the video data are separately stored, and each piece of advertisement data and the video data are associated by using the relative playback time point of each piece of advertisement data;
a fourth acquiring unit, configured to acquire, when the video data is played at any relative playback time point in the relative playback time points acquired by the third acquiring unit, at least one piece of advertisement data, associated with the video data, at the any relative playback time point; and
a second superimposing unit, configured to superimpose, on a page of the video data, prompt information of the at least one piece of advertisement data when the video data is played.

With reference to the fourth aspect, in a first possible implementation manner, the terminal further includes:
a first downloading unit, configured to download the video data and each piece of advertisement data from a server; and
a storage unit, configured to store the video data and each piece of advertisement data that are downloaded by the first downloading unit;
the third acquiring unit is configured to acquire the relative playback time point of each piece of advertisement data from each piece of advertisement data stored by the storage unit; and
the fourth acquiring unit is configured to: when the video data is played at the any relative playback time point, acquire, from each piece of advertisement data stored by the storage unit, at least one piece of advertisement data, associated with the video data, at the any relative playback time point.

With reference to the fourth aspect, in a second possible implementation manner, the terminal further includes:
a second downloading unit, configured to download the video data from a server;
the third acquiring unit is configured to acquire, from the server, the relative playback time point, of each piece of advertisement data, in the playback process of the video data that starts playing; and
the fourth acquiring unit is configured to: when the video data is played at the any relative playback time point, acquire, from the server, at least one piece of advertisement data, associated with the video data, at the any relative playback time point.

With reference to the fourth aspect, or the first or second possible implementation manner of the fourth aspect, in a third possible implementation manner,
the fourth acquiring unit is further configured to: when playback of the video data is paused or stopped, acquire some or all advertisement data that is associated with the video data; and
the second superimposing unit is further configured to superimpose, in a mosaic form on a page of video data corresponding to the pause or stop moment, prompt information of the some or all advertisement data.

With reference to the third possible implementation manner of the fourth aspect, in a fourth possible implementation manner, the terminal further includes:
a second receiving unit, configured to receive a selection instruction, input by a user, for prompt information of specified advertisement data in the prompt information of the some or all advertisement data; and
a second presentation unit, configured to present, according to the selection instruction received by the second receiving unit, extension information of advertisement data corresponding to the prompt information of the specified advertisement data.

With reference to the fourth possible implementation manner of the fourth aspect, in a fifth possible implementation manner, the second receiving unit is further configured to receive a selection instruction, input by the user, for a link to specified scene data, where the link to the specified scene data is included in the extension information of the advertisement data; and
the terminal further includes:
a second switching unit, configured to switch, according to the selection instruction for the link to the specified scene data that is received by the second receiving unit, the video data to the scene data corresponding to the link.

A fifth aspect of the present invention provides a terminal, including an input unit, a display unit, a processor, and a memory, where
the input unit is configured to: when video data is played, receive a triggering instruction for pausing or stopping; and
the processor is configured to acquire a relative playback time point at which the video data is played when the triggering instruction is received; acquire at least one piece of advertisement data that includes the relative playback time point and is associated with the video data; and superimpose, on a page of video data corresponding to the relative playback time point, prompt information of the acquired at least one piece of advertisement data.

A sixth aspect of the present invention provides a terminal, including an input unit, a display unit, a processor, and a memory, where
the processor is configured to: acquire a relative playback time point, of each piece of advertisement data, in a playback process of video data that starts playing, where each piece of advertisement data and the video data are separately stored, and each piece of advertisement data and the video data are associated by using the relative playback time point of each piece of advertisement data; acquire, when the video data is played at any relative playback time point in the relative playback time points, at least one piece of advertisement data, associated with the video data, at the any relative playback time point; and superimpose, on a page of the video data, prompt information of the at least one piece of advertisement data when the video data is played.

A seventh aspect of the present invention provides a data presentation system, including a terminal and a server, where
the server stores video data and advertisement data that is associated with the video data; and
the terminal is the terminal.

An eighth aspect of the present invention provides a data presentation system, including a terminal and a server, where
the server stores video data and advertisement data that is associated with the video data; and
the terminal is the terminal.

In the embodiments of the present invention, when video data is played, receiving a triggering instruction for pausing or stopping; acquiring a relative playback time point at which the video data is played when the triggering instruction is received; acquiring at least one piece of advertisement data that includes the relative playback time point and is associated with the video data; and superimposing, on a page of video data corresponding to the relative playback time point, prompt information of the acquired at least one piece of advertisement data. Compared with the prior art in which video data and advertisement data can be synchronously presented only after being synthesized, according to the data presentation method provided in the embodiments of the present invention, to-be-presented advertisement data and video data are separated, which avoids operation complexity caused by synthesizing the advertisement data and the video data. In addition, multiple pieces of advertisement data can be presented at a same moment.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person skilled in the art may still derive other drawings from these accompanying drawings without creative efforts.
FIG. 1 is a schematic diagram of an embodiment of a data presentation method according to an embodiment of the present invention;
FIG. 2 is a schematic diagram of an embodiment of an advertisement file according to an embodiment of the present invention;
FIG. 3 is a schematic diagram of another embodiment of a data presentation method according to an embodiment of the present invention;
FIG. 4 is a schematic diagram of an architecture of a terminal according to an embodiment of the present invention;
FIG. 5 is a schematic diagram of a data presentation effect according to an embodiment of the present invention;
FIG. 6 is another schematic diagram of a data presentation effect according to an embodiment of the present invention;
FIG. 7 is another schematic diagram of a data presentation effect according to an embodiment of the present invention;
FIG. 8 is a schematic diagram of another embodiment of a terminal according to an embodiment of the present invention;
FIG. 9 is a schematic diagram of another embodiment of a terminal according to an embodiment of the present invention;
FIG. 10 is a schematic diagram of another embodiment of a terminal according to an embodiment of the present invention;
FIG. 11 is a schematic diagram of another embodiment of a terminal according to an embodiment of the present invention;
FIG. 12 is a schematic diagram of another embodiment of a terminal according to an embodiment of the present invention;
FIG. 13 is a schematic diagram of another embodiment of a terminal according to an embodiment of the present invention;
FIG. 14 is a schematic diagram of another embodiment of a terminal according to an embodiment of the present invention;
FIG. 15 is a schematic diagram of another embodiment of a terminal according to an embodiment of the present invention;
FIG. 16 is a schematic diagram of another embodiment of a terminal according to an embodiment of the present invention; and
FIG. 17 is a schematic diagram of an embodiment of a system according to an embodiment of the present invention.

### DESCRIPTION OF EMBODIMENTS

Embodiments of the present invention provide a data presentation method, where to-be-presented advertisement data and video data are separated, which avoids operation complexity caused by synthesizing the advertisement data and the video data. The embodiments of the present invention further provide a corresponding terminal and system. The following separately gives detailed descriptions.

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person skilled in the art based on the embodiments of the present invention without creative efforts shall fall within the protection scope of the present invention.

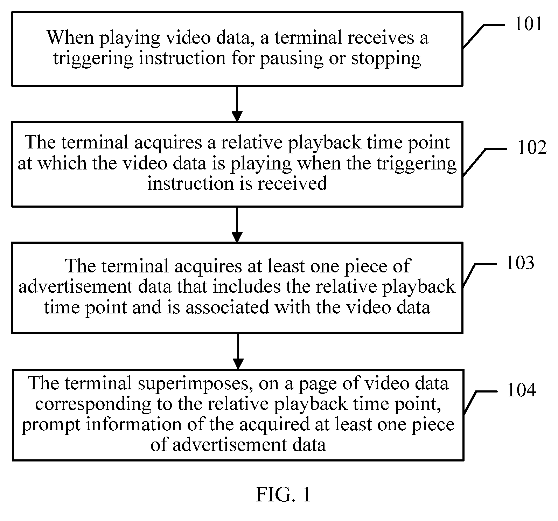

Referring to FIG. 1, an embodiment of a data presentation method provided in an embodiment of the present invention includes:
101. When playing video data, a terminal receives a triggering instruction for pausing or stopping.
   The triggering instruction for pausing or stopping may be triggered by a user or triggered by a system because of a network factors.
102. The terminal acquires a relative playback time point at which the video data is played when the triggering instruction is received.
103. The terminal acquires at least one piece of advertisement data that includes the relative playback time point and is associated with the video data.

In this embodiment of the present invention, the video data and the advertisement data are produced in a separated form. After being produced, the video data and the advertisement data only need to be separately stored without being synthesized. The advertisement data may be produced by an advertisement data producer according to content of the video data. Each piece of video data may be associated with multiple pieces of advertisement data. The advertisement data may include information such as a relative playback time point in the video data and extension information of the advertisement data.

The relative playback time point is counted starting from a moment at which the video data starts playing. For example, when the video data is played at 00:03:51, one or more pieces of advertisement data need to be prompted, and therefore, a relative playback time point of the one or more pieces of advertisement data is 00:03:51.

For example, if a relative playback time point at which the video data is paused or stopped is 00:10:00, advertisement data in a time range from 00:08:00 to 00:12:00 may be acquired, which is certainly not limited; or advertisement data in another time range including 00:10:00 may be acquired.

The extension information of the advertisement data may include information such as a product name, a product description, an ordering hotline, and a website; and may be in a form of an image, a document, a link, an advertisement audio/video, or the like.

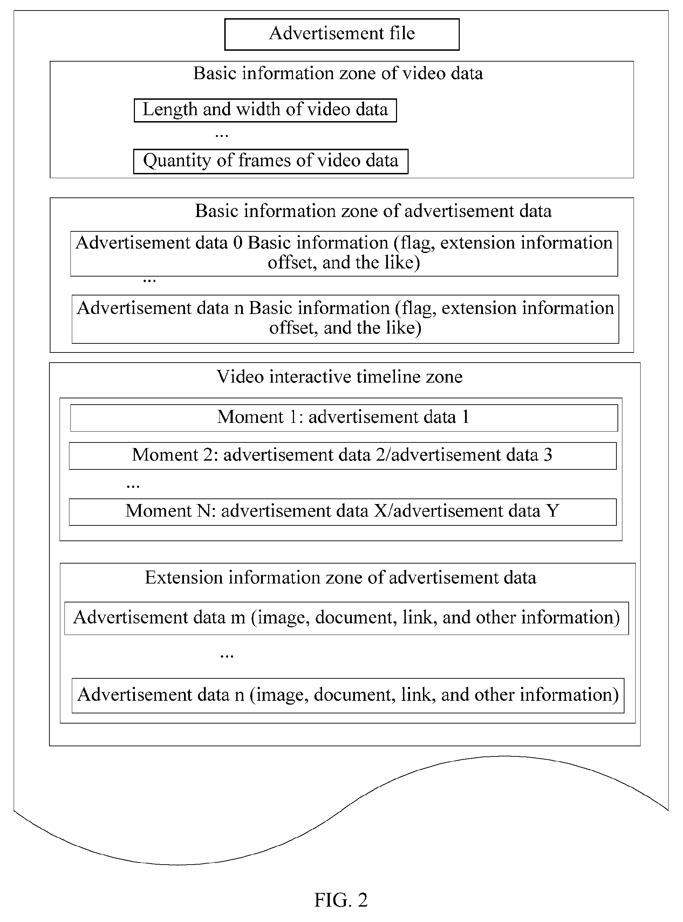

Specifically, a mapping relationship between advertisement data and a relative playback time point may be stored in a mapping table. Reference may also be made to FIG. 2 to understand a form of saving advertisement data in this embodiment of the present invention. Advertisement data in FIG. 2 is produced in an advertisement file manner.

An advertisement file shown in FIG. 2 includes four parts of information, which are a basic information region of video data, a basic information region of advertisement data, a video interactive timeline zone, and an extension information region of advertisement data.

The basic information region of the video data includes information such as a length and a width of the video data and a total quantity of frames in the video data.

The basic information region of the advertisement data includes basic information such as a flag of advertisement data and an extension information offset, where the extension information offset may be an address, in the advertisement file, of extension information.

The video interactive timeline zone includes specific information about how advertisement data is associated with video data according to a timeline. For example, at a moment 1, advertisement data 1 is associated; at a moment 2, advertisement data 2 and advertisement data 3 are associated; and at a moment N, advertisement data X or advertisement data Y is associated. In this embodiment of the present invention, N, X, and Y are all integers greater than 3. The moments 1, 2, ..., and N are relative playback time points.

The extension information region of the advertisement data includes extension information included in the advertisement data, for example, pictures, documents, links, advertisement videos and audios, and other specific information that correspond to advertisement data m and advertisement data n.

The advertisement data may also be produced in a form of a database.

In this embodiment of the present invention, the terminal may download in advance, from a server, video data and all advertisement data associated with the video data and locally store the downloaded video data and all the advertisement data associated with the video data. When advertisement data is acquired, a relative playback time point of each piece of advertisement data may be directly obtained by parsing the locally stored advertisement data and is read. In addition, when receiving a triggering instruction and obtaining a relative playback time point corresponding to the triggering instruction, the terminal may also directly acquire, from the locally stored advertisement data, advertisement data including the relative playback time point, and superimpose prompt information of the advertisement data, so that a user can choose to view extension information of corresponding advertisement data.

Alternatively, in this embodiment of the present invention, the terminal may also download only video data from a server, and after receiving a triggering command, acquire from the server, according to a flag of the video data and a relative playback time point corresponding to the triggering command, advertisement data that is associated with the video data and includes the relative playback time point.

In this instant downloading manner, local memory can be saved.

104. The terminal superimposes, on a page of video data corresponding to the relative playback time point, prompt information of the acquired at least one piece of advertisement data.

It may be understood that the prompt information of the advertisement data may be extracted from the extension information of the advertisement data.

The prompt information of the advertisement data may include a product name, a product picture, the first frame of image of an advertisement video, and the like. When playback of the video is paused or stopped, the prompt information of the advertisement data is superimposed on the page of the video data, for example, the product name or the product picture is superimposed.

The prompt information of the advertisement data may be superimposed on the page of the video data, and specifically, may be superimposed and presented on the page of the video data by using a list; and may also be displayed when an operation focus (such as a cursor) is moved to a specific location on the page of the video data. For example, there is a piece of clothing on the current page of the video data; and when interested in this piece of clothing, a user may move the operation focus to this piece of clothing, and the terminal superimposes and presents prompt information of advertisement data of this piece of clothing on which the operation focus is located, for example, the terminal may noticeably present this piece of clothing or display a name of this piece of clothing.

In this embodiment of the present invention, there are multiple manners of performing a noticeable presentation, such as enlarging, highlighting, and protruding from other mosaics, a noticeable presentation may be performed by using a combination of the foregoing manners, and another manner of noticeable displaying may also be used, which is not limited herein.

In this embodiment of the present invention, the following method is used: when video data is played, receiving a triggering instruction for pausing or stopping; acquiring a relative playback time point at which the video data is played when the triggering instruction is received; acquiring at least one piece of advertisement data that includes the relative playback time point and is associated with the video data; and superimposing, on a page of video data corresponding to the relative playback time point, prompt information of the acquired at least one piece of advertisement data. Compared with the prior art in which video data and advertisement data can be synchronously presented only after being synthesized, according to the data presentation method provided in this embodiment of the present invention, to-be-presented advertisement data and video data are separated, which avoids operation complexity caused by synthesizing the advertisement data and the video data. In addition, multiple pieces of advertisement data can be presented at a same moment.

Based on the foregoing embodiment corresponding to FIG. 1, in another embodiment of a data presentation method provided in an embodiment of the present invention, the method may further include:
receiving a selection instruction, input by a user, for prompt information of specified advertisement data in the prompt information of the at least one piece of advertisement data; and
presenting, according to the selection instruction, extension information of advertisement data corresponding to the prompt information of the specified advertisement data.

For example, when playback of the video data is paused or stopped, prompt information of three pieces of advertisement data is presented on the page. When a selection instruction, input by the user, for prompt information of the first piece of advertisement data is received, extension information of the advertisement data corresponding to the prompt information of the specified advertisement data, that is, extension information of the first piece of advertisement data, is presented according to the selection instruction. The extension information of the first piece of advertisement data may be presented by using a newly opened window.

This embodiment of the present invention is not merely limited to presenting the advertisement data by using a newly opened window, and another screen may also be used to present the advertisement data. If another terminal of the user, such as a notebook computer, a person digital assistant (Personal Digital Assistant, PDA), or a mobile phone, is in communication connection with a device that plays a video, the advertisement data may also be presented by using a device such as the notebook computer, the person digital assistant (Personal Digital Assistant, PDA), or the mobile phone.

In this embodiment of the present invention, the extension information may include scene data at a time point in the video data, and advertisement data is associated with scene data at a specific time point in the video data. For example, a heroine in video data wears a same piece of clothing when the video data is played at the 20th minute, the 25th minute, and the 40th minute; when the video data is played at the 28th minute, the video data is paused, and this piece of clothing that is included in prompt information of advertisement data associated with the video in a time range from the 26th minute to the 30th minute is acquired and displayed. When interested in this piece of clothing, the user may move the operation focus to this piece of clothing, and the terminal displays prompt information of advertisement data of this piece of clothing. The prompt information of the advertisement data may also be directly superimposed and displayed in a list manner on a page of the video data. When the user selects the prompt information of the advertisement data of this piece of clothing, for example, the user clicks on the prompt information, a new window pops up and presents extension information of the advertisement data of this piece of clothing, for example, detailed information of this piece of clothing, such as a material of the clothing and a style introduction; and scene data, of the video data, in which this piece of clothing occurs is further displayed. For example, as described above, scene data at the 20th minute, the 25th minute, and the 40th minute is displayed.

Alternatively, based on the foregoing alternative embodiment corresponding to FIG. 1, in another alternative embodiment of a data presentation method provided in an embodiment of the present invention, the extension information of the advertisement data may include links to scene data at multiple time points in the video data, and the method may further include:
receiving a selection instruction, input by the user, for a link to specified scene data in the extension information of the advertisement data; and
switching, according to the selection instruction for the link to the specified scene data, the video data to the scene data corresponding to the link to the specified scene data.

In this embodiment of the present invention, when the user clicks on a link, the video data is switched to corresponding scene data, for example, a video frame about this piece of clothing from a different-angle. Certainly, the advertisement data may further include another link, such as a link to an online shop of this piece of clothing, and the user may directly click on the link to the online shop to view or buy this piece of clothing.

Alternatively, based on any one of the foregoing embodiments, in another embodiment of a data presentation method provided in an embodiment of the present invention, the superimposing prompt information of the acquired at least one piece of advertisement data may specifically include:
superimposing and presenting the prompt information of the at least one piece of advertisement data; or
superimposing the prompt information of the at least one piece of advertisement data; and when an operation focus of the user is located on the prompt information of the advertisement data, presenting the prompt information, on which the operation focus is located, of the advertisement data.

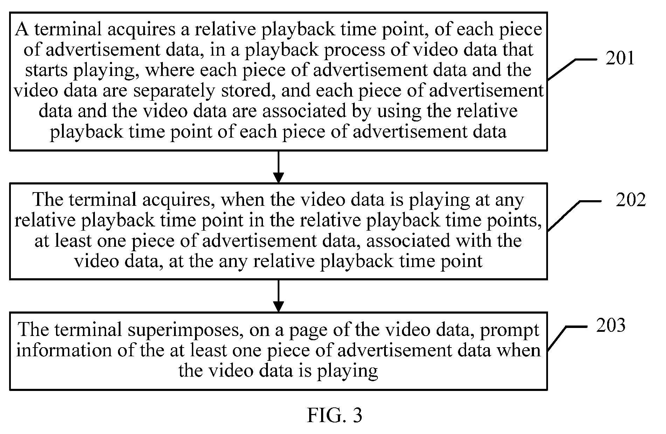

Referring to FIG. 3, another embodiment of a data presentation method provided in an embodiment of the present invention includes:
201. A terminal acquires a relative playback time point, of each piece of advertisement data, in a playback process of video data that starts playing, where each piece of advertisement data and the video data are separately stored, and each piece of advertisement data and the video data are associated by using the relative playback time point of each piece of advertisement data.

In this embodiment of the present invention, the video data and the advertisement data are produced in a separated form. After being produced, the video data and the advertisement data only need to be separately stored without being synthesized. The advertisement data may include a relationship with the video data (such as a relative playback time point prompted in the video data), extension information of the advertisement data, and the like.

A moment at which the video data starts playing is a moment 00:00:00, and the relative playback time point is counted starting from the moment 00:00:00. If one or more pieces of advertisement data need to play when the video data is played at 00:03:51, a relative playback time point of the one or more pieces of advertisement data is 00:03:51.

Advertisement data associated with one piece of video data may be sorted according to relative playback time points; content of advertisement data of different relative playback time points may be the same and may also be different.

The extension information of the advertisement data may include information such as a product name, a product description, an ordering hotline, and a website; and may be in a form of an image, a document, a link, an advertisement audio/video, or the like.

202. The terminal acquires, when the video data is played at any relative playback time point in the relative playback time points, at least one piece of advertisement data, associated with the video data, at the any relative playback time point.

203. The terminal superimposes, on a page of the video data, prompt information of the at least one piece of advertisement data when the video data is played.

For example, video data of a two-hour movie includes 11 pieces of advertisement data, and prompt information of one piece of advertisement data is superimposed every 10 minutes separately at each relative playback time point. When the video data is played at 00:10:00, the first piece of advertisement data in time sequence is acquired, and prompt information of the first piece of advertisement data is superimposed; when the video data is played at 00:30:00, the third piece of advertisement data in time sequence is acquired, and prompt information of the third piece of advertisement data is superimposed. When a relative playback time point arrives, advertisement data corresponding to the relative playback time point is acquired, and prompt information of the advertisement data at the relative playback time point is superimposed.

It should be noted that one relative playback time point may be associated with at least one piece of advertisement data. If three pieces of advertisement data are associated with the time point 00:10:00, prompt information of these three pieces of advertisement data is simultaneously superimposed and displayed on a page of the video data when the video data is played at 00:10:00.

A timer may be disposed in the terminal. The timer starts timing at 00:00:00 at which the video data starts playing, and when a relative playback time point arrives, the timer may send out a triggering instruction, so that the terminal acquires advertisement data at the relative playback time point according to the triggering instruction.

When a user selects prompt information of specified advertisement data, extension information of the advertisement data may be presented in a new window manner.

For a relationship between video data and advertisement data in this embodiment of the present invention, reference may be made to FIG. 2 for understanding.

In this embodiment of the present invention, playback of the video data does not need to be paused, and only prompt information of acquired advertisement data needs to be superimposed on a page of the video data. For example, a user moves an operation focus to an object that interests the user in a video, and the terminal noticeably displays the object, so as to superimpose prompt information of advertisement data of the object; or superimposes and presents a name of the object on the page of the video data, and a specific presentation form is not limited.

When one relative playback time point is associated with more than two pieces of advertisement data, prompt information of advertisement data at the relative playback time point may be separately presented in a list manner.

In this embodiment of the present invention, the following method is used: acquiring a relative playback time point, of each piece of advertisement data, in a playback process of video data that starts playing, where each piece of advertisement data and the video data are separately stored, and each piece of advertisement data and the video data are associated by using the relative playback time point of each piece of advertisement data; acquiring, when the video data is played at any relative playback time point in the relative playback time points, at least one piece of advertisement data, associated with the video data, at the any relative playback time point; and superimposing and presenting, on a page of the video data, prompt information of the at least one piece of advertisement data when the video data is played. Compared with the prior art in which video data and advertisement data can be synchronously presented only after being synthesized, according to the data presentation method provided in this embodiment of the present invention, to-be-presented advertisement data and video data are separated, which avoids operation complexity caused by synthesizing the advertisement data and the video data.

Alternatively, based on the foregoing embodiment corresponding to FIG. 3, in a first alternative embodiment of a data presentation method provided in an embodiment of the present invention,
before the step of acquiring a relative playback time point, of each piece of advertisement data, in a playback process of video data that starts playing, the method further includes:
downloading from a server and storing the video data and each piece of advertisement data.

Specifically, the video data and an advertisement file that includes the advertisement data may be downloaded from the server and stored.

Correspondingly, the acquiring a relative playback time point, of each piece of advertisement data, in a playback process of video data that starts playing includes:
acquiring the relative playback time point of each piece of advertisement data from the stored each piece of advertisement data; and
correspondingly, the acquiring, when the video data is played at any relative playback time point in the relative playback time points, at least one piece of advertisement data, associated with the video data, at the any relative playback time point includes:
when the video data is played at the any relative playback time point, acquiring, from the stored each piece of advertisement data, at least one piece of advertisement data, associated with the video data, at the any relative playback time point.

In this embodiment of the present invention, the terminal may download in advance, from a server, video data and all advertisement data associated with the video data and locally store the downloaded video data and all the advertisement data associated with the video data. When a relative playback time point of the advertisement data is acquired, a relative playback time point of each piece of advertisement data may be directly obtained by parsing the locally stored advertisement data and is read. In addition, when any relative playback time point arrives, the terminal may also directly acquire, from the locally stored advertisement data, advertisement data corresponding to the relative playback time point, and superimpose prompt information of the advertisement data, so that a user can choose to view extension information of corresponding advertisement data.

Alternatively, based on the foregoing embodiment corresponding to FIG. 3, in a second alternative embodiment of a data presentation method provided in an embodiment of the present invention, before the step of acquiring a relative playback time point, of each piece of advertisement data, in a playback process of video data that starts playing, the method further includes:
downloading the video data from a server;
correspondingly, the acquiring a relative playback time point, of each piece of advertisement data, in a playback process of video data that starts playing includes:
   acquiring, from the server, the relative playback time point, of each piece of advertisement data, in the playback process of the video data that starts playing, which may specifically be: acquiring a mapping relationship between an acquiring address of each piece of advertisement data and a relative playback time point from the server; and
   correspondingly, the acquiring, when the video data is played at any relative playback time point in the relative playback time points, at least one piece of advertisement data, associated with the video data, at the any relative playback time point includes:
   when the video data is played at the any relative playback time point, acquiring, from the server, at least one piece of advertisement data, associated with the video data, at the any relative playback time point, which may specifically be: according to the mapping relationship between an acquiring address of each piece of advertisement data and a relative playback time point, acquiring an acquiring address of advertisement data corresponding to any relative playback time point, and acquiring the corresponding advertisement data by using the acquiring address.

In this embodiment of the present invention, when video data is to play, the terminal may also download only the video data from a server; then, acquire from the server, according to a flag of the video data, a relative playback time point of each piece of advertisement data that is associated with the video data; and when the video data is played and a relative playback time point arrives, download advertisement data at the relative playback time point from the server.

In this instant downloading manner, local memory can be saved.

Alternatively, based on the foregoing embodiment corresponding to FIG. 3 or the first or second alternative embodiment corresponding to FIG. 3, a third alternative embodiment of a data presentation method provided in an embodiment of the present invention may further include:
when playback of the video data is paused or stopped, acquiring some or all advertisement data that is associated with the video data; and
superimposing, in a mosaic form on a page of video data corresponding to the pause or stop moment, prompt information of the some or all advertisement data.

In this embodiment of the present invention, some advertisement data or all advertisement data that is associated with the video data may also be acquired at a pause or stop moment of the video data; and prompt information of the acquired advertisement data is superimposed on the video data in a mosaic form for a user to browse.

Based on the foregoing third alternative embodiment corresponding to FIG. 3, a fourth alternative embodiment of a data presentation method provided in an embodiment of the present invention may further include:
receiving a selection instruction, input by a user, for prompt information of specified advertisement data in the prompt information of the some or all advertisement data; and
presenting, according to the selection instruction, extension information of advertisement data corresponding to the prompt information of the specified advertisement data.

For example, when playback of the video data is paused or stopped, prompt information of three pieces of advertisement data is presented on the page. When a selection instruction, input by the user, for prompt information of the first piece of advertisement data is received, extension information of the advertisement data corresponding to the prompt information of the specified advertisement data, that is, extension information of the first piece of advertisement data, is presented according to the selection instruction. The extension information of the first piece of advertisement data may be presented by using a newly opened window.

This embodiment of the present invention is not merely limited to presenting the advertisement data by using a newly opened window, and another screen may also be used to present the advertisement data. If another terminal of the user, such as a notebook computer, a person digital assistant (Personal Digital Assistant, PDA), or a mobile phone, is in communication connection with a device that plays a video, the advertisement data may also be presented by using a device such as the notebook computer, the person digital assistant (Personal Digital Assistant, PDA), or the mobile phone.

In this embodiment of the present invention, the extension information may include scene data at a time point in the video data, and advertisement data is associated with scene data at a specific time point in the video data. For example, a heroine in video data wears a same piece of clothing when the video data is played at the 20th minute, the 25th minute, and the 40th minute; when the video data is played at the 28th minute, the video data is paused, and this piece of clothing that is included in prompt information of advertisement data associated with the video in a time range from the 26th minute to the 30th minute is acquired and displayed. When interested in this piece of clothing, the user may move the operation focus to this piece of clothing, and the terminal displays prompt information of advertisement data of this piece of clothing. The prompt information of the advertisement data may also be directly superimposed and displayed in a list manner on a page of the video data. When the user selects the prompt information of the advertisement data of this piece of clothing, for example, the user clicks on the prompt information, a new window pops up and presents extension information of the advertisement data of this piece of clothing, for example, detailed information of this piece of clothing, such as a material of the clothing and a style introduction; and scene data, of the video data, in which this piece of clothing occurs is further displayed. For example, as described above, scene data at the 20th minute, the 25th minute, and the 40th minute is displayed.

Alternatively, based on the foregoing alternative embodiments corresponding to FIG. 3,
in another alternative embodiment of a data presentation method provided in an embodiment of the present invention, the extension information of the advertisement data may include links to scene data at multiple time points in the video data, and the method may further include:
receiving a selection instruction, input by the user, for a link to specified scene data in the extension information of the advertisement data; and
switching, according to the selection instruction for the link to the specified scene data, the video data to the scene data corresponding to the link to the specified scene data.

In this embodiment of the present invention, when the user clicks on a link, the video data is switched to corresponding scene data, for example, a video frame about this piece of clothing from a different-angle. Certainly, the advertisement data may further include another link, such as a link to an online shop of this piece of clothing, and the user may directly click on the link to the online shop to view or buy this piece of clothing.

Alternatively, based on any one of the foregoing embodiments corresponding to FIG. 3, in another alternative embodiment of a data presentation method provided in an embodiment of the present invention, the superimposing, on a page of the video data, prompt information of the at least one piece of advertisement data may specifically include:
superimposing and presenting the prompt information of the at least one piece of advertisement data; or
superimposing the prompt information of the at least one piece of advertisement data; and when an operation focus of the user is located on the prompt information of the advertisement data, presenting the prompt information, on which the operation focus is located, of the advertisement data.

For ease of understanding, an application scenario is used as an example below to describe in detail a data presentation process in this embodiment of the present invention.

For example, a terminal has downloaded movie "Love Is Not Blind" and five pieces of produced advertisement data associated with the movie. Playback duration of the movie is 110 minutes; there is one piece of associated advertisement data "five types of wedding dresses of a brand" at a relative playback time 00:20:00, where playback duration of this piece of advertisement data is 20 seconds; there is one piece of associated advertisement data "two types of handbags of a brand" at a relative playback time 00:40:00, where playback duration of this piece of advertisement data is 10 seconds; there is one piece of associated advertisement data "coffee of a brand" at a relative playback time 01:00:00, where playback duration of this piece of advertisement data is 10 seconds; there is one piece of associated advertisement data "a restaurant" at a relative playback time 01:20:00, where playback duration of this piece of advertisement data is 15 seconds; and there is one piece of associated advertisement data "cloth shoes of a brand" at a relative playback time 01:40:00, where playback duration of this piece of advertisement data is 15 seconds. The foregoing information is represented by using Table 1 as follows:

| Advertisement Data | Relative Playback Time Point | Playback Duration |
|---|---|---|
| Five types of wedding dresses of a brand | 00:20:00 | 20 seconds |
| Two types of handbags of a brand | 00:40:00 | 10 seconds |
| Coffee of a brand | 01:00:00 | 10 seconds |
| A restaurant | 01:20:00 | 15 seconds |
| Cloth shoes of a brand | 01:40:00 | 15 seconds |

In this way, after the terminal acquires the relative playback time point of each piece of advertisement data, when the movie is played at 00:20:00, the terminal acquires the advertisement data of "five types of wedding dresses of a brand", and superimposes and presents prompt information of the advertisement data of "five types of wedding dresses of a brand" on a movie page, so that a user can select the prompt information, by using an operation focus (such as a cursor), to view the "five types of wedding dresses of a brand". After extension information of the advertisement data of "five types of wedding dresses of a brand" is played for 20 seconds in a new window, the window is hidden. When the movie is played at 00:40:00, the terminal acquires the advertisement data of "two types of handbags of a brand", and superimposes and presents prompt information of the advertisement data of "two types of handbags of a brand" on the movie page; and when the prompt information of the advertisement data of "two types of handbags of a brand" is superimposed on the movie page by using a list, the cursor may be used to select the prompt information to view the "two types of handbags of a brand". After extension information of the advertisement data of "two types of handbags of a brand" is played for 10 seconds in a new window, the window is hidden. When the movie is played at 01:00:00, the terminal acquires the advertisement data of "coffee of a brand", and superimposes and presents prompt information of the advertisement data of "coffee of a brand" on the movie page. After the user views the prompt information and extension information of the advertisement data of "coffee of a brand" is played for 10 seconds in a new window, the window is closed. When the movie is played at 01:20:00, the terminal acquires the advertisement data of "a restaurant", and superimposes and presents prompt information of the advertisement data of "a restaurant" on the movie page. After the user views the prompt information and extension information of the advertisement data is played for 15 seconds, the window is closed. When the movie is played at 01:40:00, the terminal acquires the advertisement data of "cloth shoes of a brand", and superimposes and presents prompt information of the advertisement data of "cloth shoes of a brand" on the movie page. After the user views the prompt information and extension information of "cloth shoes of a brand" is played for 15 seconds in a new window, the window is closed.

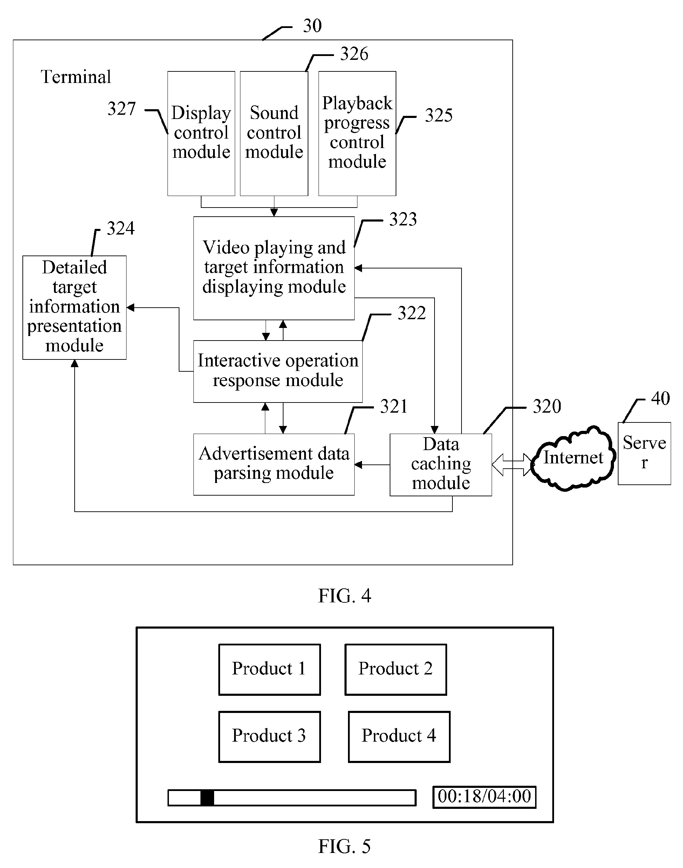

Referring to FIG. 4, an interactive presentation process of video data and advertisement data is described with reference to an architecture diagram of a terminal according to an embodiment of the present invention.

A terminal 30 interacts with a server 40 by using the Internet; requests video data, advertisement data, and other data from the server 40; and buffers these data into a temporary folder of a browser of a local data buffering module 320.

After the advertisement data is buffered locally, first, it is determined whether the advertisement data conforms to a specification, where if the advertisement data is abnormal, an error is reported; and if the advertisement data is normal, a further operation is performed. An advertisement data parsing module 321 reads basic information of advertisement data and presents timeline information with an interaction object in FIG. 2.

In order not to disturb a user watching process, in a pause state, prompt information of advertisement data that includes the time point is superimposed in a video pause image. When a video is in the pause state, the advertisement data parsing module 321 acquires a current video pause moment, performs matching on timelines of interaction objects, acquires prompt information of advertisement data in a period of time before and after the current pause moment, and submits information about these objects to a video playing and target information displaying module 323.

The video playing and target information displaying module 323 superimposes the prompt information of the advertisement data in a video image, where a zone corresponding to the prompt information of the advertisement data is set as an interaction zone. After a user uses a focus to select prompt information of interactive advertisement data, related information of a corresponding target is returned and transferred to another related module for performing a further operation.

An interactive operation response module 322 obtains, according to an operation focus of the user, a flag of advertisement data focused by the user, and then, the advertisement data parsing module 321 queries extension information of corresponding advertisement data. The extension information of the advertisement data is transferred to a detailed target information presentation module 324.

The detailed target information presentation module 324 is responsible for presenting, in a detailed information box, the extension information of the advertisement data that is transferred by the interactive operation response module 322. A general processing process is: reorganizing the extension information of the advertisement data according to a specific rule so as to adapt to the detailed information box; and then, rendering the extension information such as a picture and a text, and presenting rendered information to the user. The user can perform operations, such as viewing, skipping, referencing, forwarding, and recording, on the extension information, can perform price comparison according to commodity-class information, place an order, and make a payment, and can leave a message to or communicate with a note provider by voice or video.

The video playing and target information displaying module 323 communicates with a playback progress control module 325, a sound control module 326, and a display control module 327; and is responsible for playing, pausing, and muting a video and performing another related operation.

Referring to FIG. 5, when video data is in a pause state, four pieces of advertisement data are acquired, and prompt information of the four pieces of advertisement data separately presents four different products, which are separately a product 1, a product 2, a product 3, and a product 4. The prompt information of the advertisement data is superimposed and presented on a page of the video data in a mosaic form.

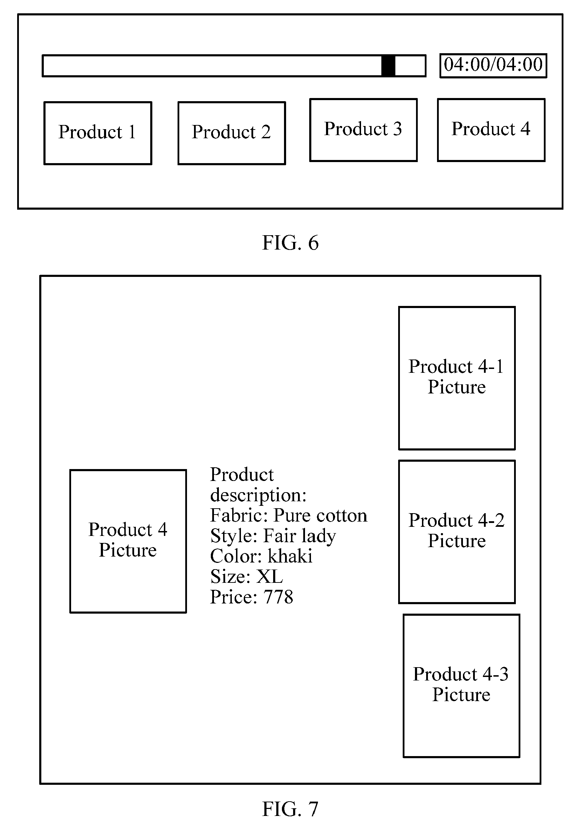

Referring to FIG. 6, when video data is in a stop state, a list of prompt information of all advertisement data associated with the video data is acquired. When a user is interested in prompt information of one piece of advertisement data of all the advertisement data, for example, the user is interested in the product 4 of the four different products, the user may select the product 4. As shown in FIG. 7, a terminal presents extension information of advertisement data of the product 4. It is assumed that the product 4 is a spring new wind coat, and detailed information of the product 4 is presented, where the detailed information includes: product description information of the wind coat: pure cotton fabric, fair lady style, khaki, size XL, and price 778 CNY. The extension information also automatically skips to another piece of advertisement data associated with the product 4, for example, a product 4-1, a product 4-2, and a product 4-3, which are separately wind coats of a same type in different colors.

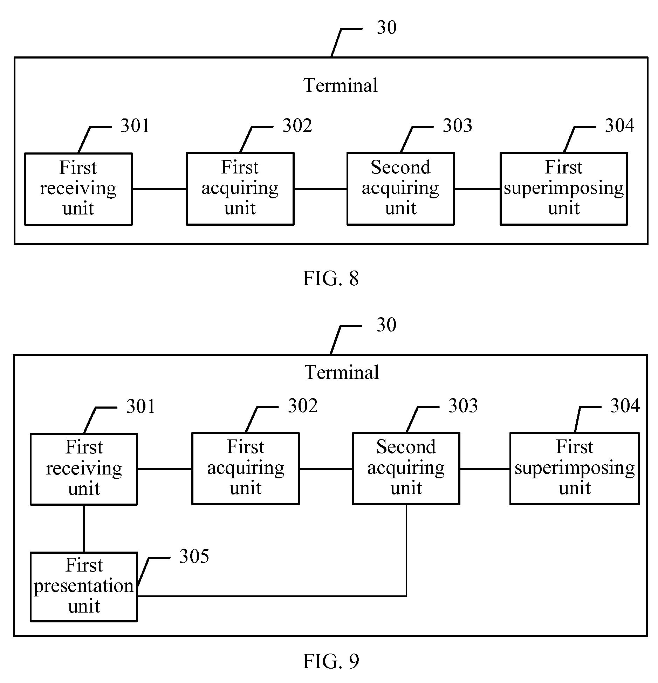

Referring to FIG. 8, an embodiment of a terminal provided in an embodiment of the present invention includes:
a first receiving unit 301, configured to: when video data is played, receive a triggering instruction for pausing or stopping;
a first acquiring unit 302, configured to acquire a relative playback time point at which the video data is played when the first receiving unit 301 receives the triggering instruction;
a second acquiring unit 303, configured to acquire at least one piece of advertisement data that includes the relative playback time point acquired by the first acquiring unit 302 and is associated with the video data; and
a first superimposing unit 304, configured to superimpose, on a page of video data corresponding to the relative playback time point, prompt information of the at least one piece of advertisement data acquired by the second acquiring unit 303.

In this embodiment of the present invention, when video data is played, a first receiving unit 301 receives a triggering instruction for pausing or stopping; a first acquiring unit 302 acquires a relative playback time point at which the video data is played when the first receiving unit 301 receives the triggering instruction; a second acquiring unit 303 acquires at least one piece of advertisement data that includes the relative playback time point acquired by the first acquiring unit 302 and is associated with the video data; and a first superimposing unit 304 superimposes, on a page of video data corresponding to the relative playback time point, prompt information of the at least one piece of advertisement data acquired by the second acquiring unit 303. Compared with the prior art in which video data and advertisement data can be synchronously presented only after being synthesized, according to the terminal provided in this embodiment of the present invention, to-be-presented advertisement data and video data are separated, which avoids operation complexity caused by synthesizing the advertisement data and the video data.

Based on the foregoing embodiment corresponding to FIG. 8, referring to FIG. 9, in another embodiment of a terminal provided in an embodiment of the present invention,
the first receiving unit 301 is further configured to receive a selection instruction, input by a user, for prompt information of specified advertisement data in the prompt information of the at least one piece of advertisement data; and
the terminal further includes a first presentation unit 305, configured to present, according to the selection instruction received by the first receiving unit 301, extension information of advertisement data corresponding to the prompt information of the specified advertisement data.

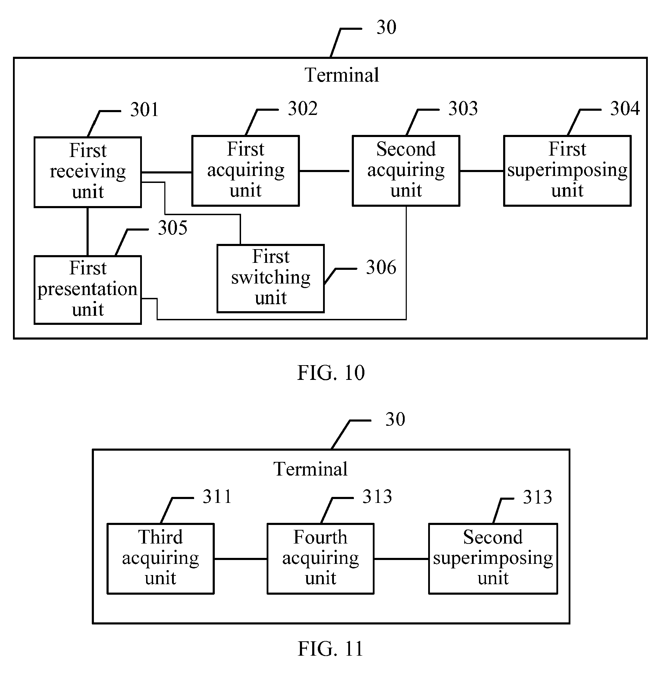

Based on the foregoing embodiment corresponding to FIG. 9, referring to FIG. 10, in another embodiment of a terminal provided in an embodiment of the present invention, when the extension information of the advertisement data occurs in at least two scenes in the video data, the first receiving unit 301 receives a selection instruction, input by the user, for a link to specified scene data, where the link to the specified scene data is included in the extension information of the advertisement data; and
the terminal 30 further includes:
a first switching unit 306, configured to switch, according to the received selection instruction selected by the user for the link to the specified scene data, the video data to the scene data corresponding to the link.

Referring to FIG. 11, another embodiment of a terminal provided in an embodiment of the present invention includes:
a third acquiring unit 311, configured to acquire a relative playback time point, of each piece of advertisement data, in a playback process of video data that starts playing, where each piece of advertisement data and the video data are separately stored, and each piece of advertisement data and the video data are associated by using the relative playback time point of each piece of advertisement data;
a fourth acquiring unit 312, configured to acquire, when the video data is played at any relative playback time point in the relative playback time points acquired by the third acquiring unit, at least one piece of advertisement data, associated with the video data, at the any relative playback time point; and
a second superimposing unit 313, configured to superimpose, on a page of the video data, prompt information of the at least one piece of advertisement data when the video data is played.

In this embodiment of the present invention, a third acquiring unit 311 acquires a relative playback time point, of each piece of advertisement data, in a playback process of video data that starts playing, where each piece of advertisement data and the video data are separately stored, and each piece of advertisement data and the video data are associated by using the relative playback time point of each piece of advertisement data; a fourth acquiring unit 312 acquires, when the video data is played at any relative playback time point in the relative playback time points acquired by the third acquiring unit, at least one piece of advertisement data, associated with the video data, at the any relative playback time point; and a second superimposing unit 313 superimposes, on a page of the video data, prompt information of the at least one piece of advertisement data when the video data is played. Compared with the prior art in which video data and advertisement data can be synchronously presented only after being synthesized, according to the terminal provided in this embodiment of the present invention, to-be-presented advertisement data and video data are separated, which avoids operation complexity caused by synthesizing the advertisement data and the video data.

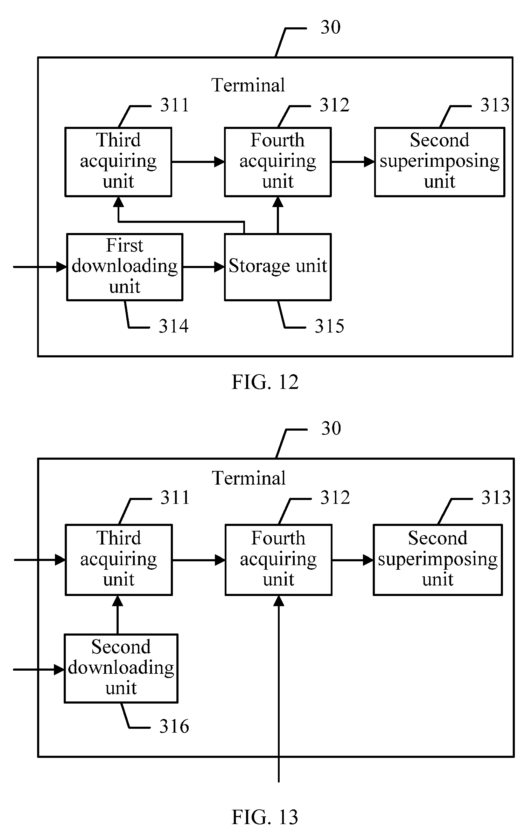

Alternatively, based on the foregoing embodiment corresponding to FIG. 11, referring to FIG. 12, in another embodiment of a terminal provided in an embodiment of the present invention, the terminal 30 further includes:
a first downloading unit 314, configured to download the video data and each piece of advertisement data from a server; and
a storage unit 315, configured to store the video data and each piece of advertisement data that are downloaded by the first downloading unit 314;
the third acquiring unit 311 is configured to acquire the relative playback time point of each piece of advertisement data from each piece of advertisement data stored by the storage unit 315; and
the fourth acquiring unit 312 is configured to: when the video data is played at the any relative playback time point, acquire, from each piece of advertisement data stored by the storage unit 311, at least one piece of advertisement data, associated with the video data, at the any relative playback time point.

Alternatively, based on the foregoing embodiment corresponding to FIG. 11, referring to FIG. 13, in another embodiment of a terminal provided in an embodiment of the present invention, the terminal 30 further includes:
a second downloading unit 316, configured to download the video data from a server;
the third acquiring unit 311 is configured to acquire, from the server, the relative playback time point, of each piece of advertisement data, in the playback process of the video data that starts playing; and
the fourth acquiring unit 312 is configured to: when the video data is played at the any relative playback time point, acquire, from the server, at least one piece of advertisement data, associated with the video data, at the any relative playback time point.

Based on any one of the foregoing embodiments in FIG. 11 to FIG. 13, in another embodiment of a terminal provided in an embodiment of the present invention,
the fourth acquiring unit 312 is further configured to: when playback of the video data is paused or stopped, acquire some or all advertisement data that is associated with the video data; and
the second superimposing unit 313 is further configured to superimpose, in a mosaic form on a page of video data corresponding to the pause or stop moment, prompt information of the some or all advertisement data.

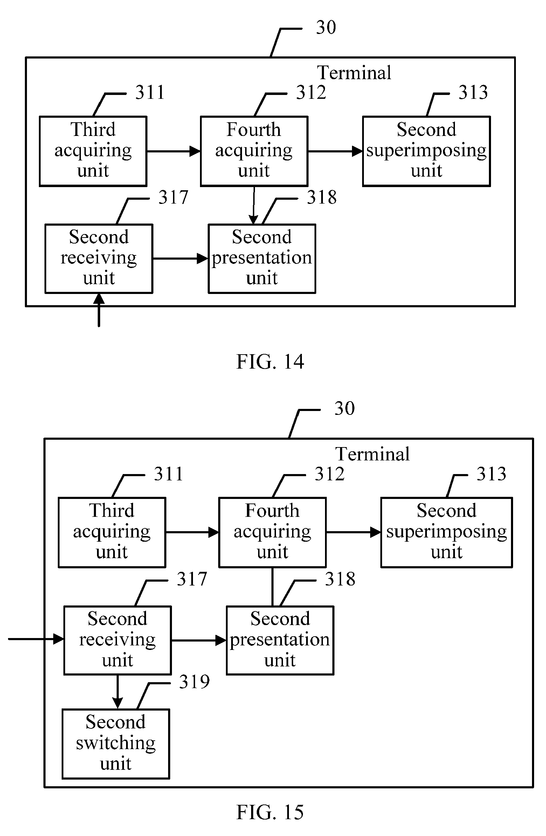

Based on the foregoing alternative embodiments, referring to FIG. 14, in another embodiment of a terminal provided in an embodiment of the present invention, the terminal 30 further includes:
a second receiving unit 317, configured to receive a selection instruction, input by a user, for prompt information of specified advertisement data in the prompt information of the some or all advertisement data; and
a second presentation unit 318, configured to present, according to the selection instruction, extension information of advertisement data corresponding to the prompt information of the specified advertisement data.

Based on the foregoing alternative embodiments, referring to FIG. 15, in another embodiment of a terminal provided in an embodiment of the present invention, the second receiving unit 317 is further configured to receive a selection instruction, input by the user, for a link to specified scene data, where the link to the specified scene data is included in the extension information of the advertisement data; and
the terminal 30 further includes:
a second switching unit 319, configured to switch, according to the selection instruction input by the user, the video data to the scene data corresponding to the link.

The present invention further provides a computer readable storage medium, where the computer readable storage medium stores a program, and when the program is executed, some or all steps of the foregoing data presentation method are performed.

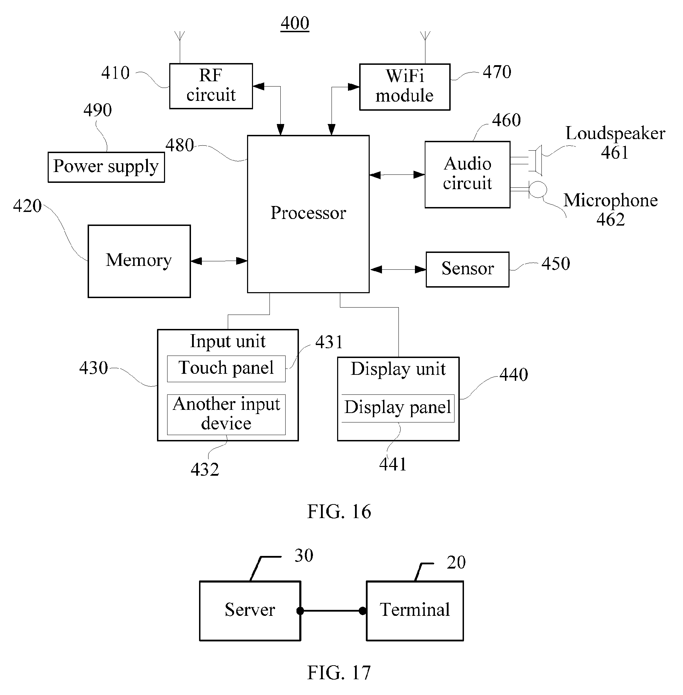

FIG. 16 shows a structure of a terminal provided in an embodiment of present invention. The terminal provided in this embodiment of the present invention may be used to implement an information input control method in the embodiments of the present invention. For ease of description, only a part related to this embodiment of the present invention is shown. For undisclosed specific technical details, refer to the part of method embodiments of the present invention for understanding.

The terminal may be a terminal, including a mobile phone, a tablet computer, a PDA (Personal Digital Assistant, personal digital assistant), a POS (Point of Sales, point of sales), an in-vehicle computer, or the like. The terminal being a mobile phone is used as an example, and FIG. 16 shows a block diagram of a partial structure of a terminal 30 related to the terminal provided in this embodiment of the present invention. Referring to FIG. 16, the terminal 30 includes components such as an RF (Radio Frequency, radio frequency) circuit 410, a memory 420, an input unit 430, a display unit 440, a sensor 450, an audio circuit 460, a Wireless Fidelity (wireless fidelity, WiFi) module 470, a processor 480, and a power supply 490. A person skilled in the art may understand that the structure of the mobile phone shown in FIG. 16 does not constitute a limitation to the mobile phone, and the mobile phone may include components more components or fewer components than those shown in the figure, or some components may be combined, or a different component deployment may be used.

The following introduces each component of the terminal 30 in detail with reference to FIG. 16.

The RF circuit 410 may be configured to receive and send a signal in an information receiving or sending process or in a call process. Particularly, the RF circuit 410 receives downlink information from a base station, then, delivers the downlink information to the processor 480 for processing, and, sends related uplink data to the base station. Generally, the RF circuit includes but is not limited to an antenna, at least one amplifier, a transceiver, a coupler, a low noise amplifier (Low Noise Amplifier, LNA), a duplexer, and the like. In addition, the RF circuit 410 may also communicate with a network and other devices by wireless communication. The wireless communication may use any communications standard or protocol, which includes, but is not limited to, Global System for Mobile Communications (Global System of Mobile communication, GSM), General Packet Radio Service (General Packet Radio Service, GPRS), Code Division Multiple Access (Code Division Multiple Access, CDMA), Wideband Code Division Multiple Access (Wideband Code Division Multiple Access, WCDMA), Long Term Evolution (Long Term Evolution, LTE), e-mail, Short Message Service (Short Messaging Service, SMS), and the like.

The memory 420 may be configured to store a software program and module. The processor 480 runs the software program and module stored in the memory 420, to implement various functional applications and data processing of the terminal 30. The memory 420 may mainly include a program storage area and a data storage area. The program storage area may store an operating system, an application program required by at least one function (such as a sound playback function and an image playback function), and the like. The data storage area may store data (such as audio data and an address book) created according to use of the terminal 30, and the like. In addition, the memory 420 may include a high-speed random access memory, and may also include a non-volatile memory such as at least one disk storage device, a flash memory, or another volatile solid-state storage device.

The input unit 430 may be configured to receive input digit or character information, and generate keyboard signal input related to user settings and functional control of the terminal 30. Specifically, the input unit 430 may include a touch panel 431 and another input device 432. The touch panel 431, which is also referred to as a touchscreen, may collect a touch operation of a user on or near the touch panel (such as an operation of the user on the touch panel 431 or near the touch panel 431 by using any suitable object or accessory such as a finger or a stylus), and drive a corresponding connection apparatus according to a preset program. Optionally, the touch panel 431 may include two parts: a touch detection apparatus and a touch controller. The touch detection apparatus detects a touch position of the user, detects a signal generated by the touch operation, and transfers the signal to the touch controller. The touch controller receives touch information from the touch detection apparatus, converts the touch information into touch point coordinates, and sends the touch point coordinates to the processor 480. Moreover, the touch controller can receive and execute a command sent from the processor 480. In addition, the touch panel 431 may be a resistive, capacitive, infrared, or surface sound wave type touch panel. The input unit 430 may include another input device 432 in addition to the touch panel 431. Specifically, the another input device 432 may include, but is not limited to, one or more of a physical keyboard, a function key (such as a volume control key or a switch key), a track ball, a mouse, and a joystick.

The display unit 440 may be configured to display information input by the user or information provided for the user, and various menus of the terminal 30. The display unit 440 may include a display panel 441. Optionally, the display panel 441 may be configured by using a liquid crystal display (Liquid Crystal Display, LCD), an organic light-emitting diode (Organic Light-Emitting Diode, OLED) or another form. Further, the touch panel 431 may cover the display panel 441. After detecting a touch operation on or near the touch panel 431, the touch panel 431 transfers the touch operation to the processor 480, so as to determine the type of the touch event. Then, the processor 480 provides a corresponding visual output on the display panel 441 according to the type of the touch event. Although, in FIG. 16, the touch panel 431 and the display panel 441 are used as two independent parts to implement input and input functions of the terminal 30, in some embodiments, the touch panel 431 and the display panel 441 may be integrated to implement the input and output functions of the terminal 30.

The terminal 30 may further include at least one sensor 450 such as a light sensor, a motion sensor, and another sensor. Specifically, the light sensor may include an ambient light sensor and a proximity sensor. The ambient light sensor may adjust luminance of the display panel 441 according to brightness of ambient light. The proximity sensor may switch off the display panel 441 and/or backlight when the terminal 30 is moved to an ear. As one type of motion sensor, an accelerometer sensor may detect magnitude of accelerations in various directions (generally on three axes), may detect magnitude and a direction of the gravity when static, and may be applied to an application that recognizes the attitude of a mobile phone (for example, switching between landscape orientation and portrait orientation, a related game, and magnetometer attitude calibration), a function related to vibration recognition (such as a pedometer and a knock), and the like. Other sensors, such as a gyroscope, a barometer, a hygrometer, a thermometer, and an infrared sensor, which may also be configured in the terminal 30, are not further described herein.

The audio circuit 460, a loudspeaker 461, and a microphone 462 may provide audio interfaces between the user and the terminal 30. The audio circuit 460 may convert received audio data into an electric signal, and transmit the electric signal to the loudspeaker 461. The loudspeaker 461 converts the electric signal into a sound signal for output. On the other hand, the microphone 462 converts a collected sound signal into an electric signal. The audio circuit 460 receives the electric signal and converts the electric signal into audio data, and outputs the audio data to the processor 480 for processing. The processor 480 sends the audio data to, for example, another mobile phone, by using the RF circuit 410, or outputs the audio data to the memory 420 for further processing.

WiFi is a short-distance wireless transmission technology. The terminal 30 may help, by using the WiFi module 470, the user to receive or send emails, browse a web page, access streaming media, and so on, which provides wireless broadband Internet access for the user. Although FIG. 16 shows the WiFi module 470, it may be understood that the WiFi module is not a necessary component of the terminal 30, and when required, the WiFi module 470 may be completely omitted as long as the scope of the essence of the present invention is not changed.

The processor 480 is the control center of the terminal 30, and is connected to various parts of the mobile phone by using various interfaces and lines. By running or executing the software program and/or module stored in the memory 420, and invoking data stored in the memory 420, the processor 480 performs various functions and data processing of the terminal 30, so as to perform overall monitoring on the mobile phone. Optionally, the processor 480 may include one or more processing units. Preferably, the processor 480 may integrate an application processor and a modem. The application processor primarily processes an operating system, a user interface, an application program, and the like. The modem mainly processes wireless communication. It may be understood that the foregoing modem may be not integrated into the processor 480.

The terminal 30 further includes the power supply 490 (such as a battery) that supplies power to each component. Preferably, the power supply may be logically connected to the processor 480 by using a power management system, thereby implementing functions such as charging, discharging, and power consumption management by using the power management system.

Although not shown, the terminal 30 may further include a camera, a Bluetooth module, and the like, which are not further described herein.

In this embodiment of the present invention, the input unit 430 is configured to: when video data is played, receive a triggering instruction for pausing or stopping; and
the processor 480 is configured to acquire a relative playback time point at which the video data is played when the triggering instruction is received; acquire at least one piece of advertisement data that includes the relative playback time point and is associated with the video data; and superimpose, on a page of video data corresponding to the relative playback time point, prompt information of the acquired at least one piece of advertisement data.

In some embodiments of the present invention, the input unit 430 is further configured to receive a selection instruction, input by a user, for prompt information of specified advertisement data in the prompt information of the at least one piece of advertisement data; and
the display unit 440 is further configured to present, according to the selection instruction, extension information of advertisement data corresponding to the prompt information of the specified advertisement data.

In some embodiments of the present invention, the input unit 430 is further configured to receive a selection instruction, input by the user, for a link to specified scene data, where the link to the specified scene data is included in the extension information of the advertisement data; and
the processor 480 is further configured to switch, according to the selection instruction for the link to the specified scene data, the video data to the scene data corresponding to the link.

Further referring to FIG. 16, in another embodiment of a terminal provided in an embodiment of the present invention,
the processor 480 is configured to acquire a relative playback time point, of each piece of advertisement data, in a playback process of video data that starts playing, where each piece of advertisement data and the video data are separately stored, and each piece of advertisement data and the video data are associated by using the relative playback time point of each piece of advertisement data; acquire, when the video data is played at any relative playback time point in the relative playback time points, at least one piece of advertisement data, associated with the video data, at the any relative playback time point; and superimpose, on a page of the video data, prompt information of the at least one piece of advertisement data when the video data is played.

In some embodiments of the present invention, the processor 480 is further configured to download from a server and store the video data and each piece of advertisement data;
the memory 420 is configured to store the video data and each piece of advertisement data; and
the processor 480 is further configured to acquire the relative playback time point of each piece of advertisement data from the stored each piece of advertisement data; and when the video data is played at the any relative playback time point, acquire, from the stored each piece of advertisement data, at least one piece of advertisement data, associated with the video data, at the any relative playback time point.

In some embodiments of the present invention, the processor 480 is further configured to download the video data from a server; acquire, from the server, the relative playback time point, of each piece of advertisement data, in the playback process of the video data that starts playing; and when the video data is played at the any relative playback time point, acquire, from the server, at least one piece of advertisement data, associated with the video data, at the any relative playback time point.

In some embodiments of the present invention, the processor 480 is further configured to: when playback of the video data is paused or stopped, acquire some or all advertisement data that is associated with the video data; and
the display unit 440 is further configured to superimpose, in a mosaic form on a page of video data corresponding to the pause or stop moment, prompt information of the some or all advertisement data.

In some embodiments of the present invention, the input unit 430 is further configured to receive a selection instruction, input by a user, for prompt information of specified advertisement data in the prompt information of the some or all advertisement data; and
the display unit 440 is further configured to present, according to the selection instruction, extension information of advertisement data corresponding to the prompt information of the specified advertisement data.

In some embodiments of the present invention, the input unit 430 is further configured to receive a selection instruction, input by the user, for a link to specified scene data, where the link to the specified scene data is included in the extension information of the advertisement data; and
the processor 480 is further configured to switch, according to the selection instruction for the link to the specified scene data, the video data to the scene data corresponding to the link.

Referring to FIG. 17, an embodiment of a system provided in an embodiment of the present invention includes a server 40 and a terminal 30, where
the server 40 is configured to store video data and advertisement data that is associated with the video data; and
the terminal 30 is configured to: when the video data is played, receive a triggering instruction for pausing or stopping; acquire a relative playback time point at which the video data is played when the triggering instruction is received; acquire at least one piece of advertisement data that includes the relative playback time point and is associated with the video data; and superimpose, on a page of video data corresponding to the relative playback time point, prompt information of the acquired at least one piece of advertisement data.

It may also be that, the server 40 is configured to store video data and advertisement data that is associated with the video data; and
the terminal 30 is configured to acquire a relative playback time point, of each piece of advertisement data, in a playback process of video data that starts playing, where each piece of advertisement data and the video data are separately stored, and each piece of advertisement data and the video data are associated by using the relative playback time point of each piece of advertisement data; acquire, when the video data is played at any relative playback time point in the relative playback time points, at least one piece of advertisement data, associated with the video data, at the any relative playback time point; and superimpose, on a page of the video data, prompt information of the at least one piece of advertisement data when the video data is played.

A person of ordinary skill in the art may understand that all or some of the steps of the methods in the embodiments may be implemented by a program instructing relevant hardware. The program may be stored in a computer readable storage medium. The storage medium may include: a ROM, a RAM, a magnetic disk, or an optical disc.

The data presentation method, terminal, and systems provided in the embodiments of the present invention are described in detail above. In this specification, specific examples are used to describe the principle and implementation manners of the present invention, and the description of the embodiments is only intended to help understand the method and core idea of the present invention. Meanwhile, a person of ordinary skill in the art may, based on the idea of the present invention, make modifications in terms of the specific implementation manners and the application scope. Therefore, the content of this specification shall not be construed as a limitation to the present invention.

## Claims

1. A data presentation method, comprising:
when video data is played, receiving a triggering instruction for pausing or stopping;
acquiring a relative playback time point at which the video data is played when the triggering instruction is received;
acquiring at least one piece of advertisement data that comprises the relative playback time point and is associated with the video data; and
superimposing, on a page of video data corresponding to the relative playback time point, prompt information of the acquired at least one piece of advertisement data.

2. The method according to claim 1, wherein the method further comprises:
receiving a selection instruction, input by a user, for prompt information of specified advertisement data in the prompt information of the at least one piece of advertisement data; and
presenting, according to the selection instruction, extension information of advertisement data corresponding to the prompt information of the specified advertisement data.

3. The method according to claim 2, wherein the method further comprises:
receiving a selection instruction, input by the user, for a link to specified scene data, wherein the link to the specified scene data is comprised in the extension information of the advertisement data; and
switching, according to the selection instruction for the link to the specified scene data, the video data to the scene data corresponding to the link.

4. The method according to any one of claims 1 to 3, wherein the superimposing prompt information of the acquired at least one piece of advertisement data specifically comprises:
superimposing and presenting the prompt information of the at least one piece of advertisement data; or
superimposing the prompt information of the at least one piece of advertisement data; and when an operation focus of the user is located on the prompt information of the advertisement data, presenting the prompt information, on which the operation focus is located, of the advertisement data.

5. A data presentation method, comprising:
acquiring a relative playback time point, of each piece of advertisement data, in a playback process of video data that starts playing, wherein each piece of advertisement data and the video data are separately stored, and each piece of advertisement data and the video data are associated by using the relative playback time point of each piece of advertisement data;
acquiring, when the video data is playing at any relative playback time point in the relative playback time points, at least one piece of advertisement data, associated with the video data, at the any relative playback time point; and
superimposing, on a page of the video data, prompt information of the at least one piece of advertisement data when the video data is playing.

6. The method according to claim 5, wherein before the step of acquiring a relative playback time point, of each piece of advertisement data, in a playback process of video data that starts playing, the method further comprises:
downloading from a server and storing the video data and each piece of advertisement data;
correspondingly, the acquiring a relative playback time point, of each piece of advertisement data, in a playback process of video data that starts playing comprises:
acquiring the relative playback time point of each piece of advertisement data from the stored each piece of advertisement data; and
correspondingly, the acquiring, when the video data is playing at any relative playback time point in the relative playback time points, at least one piece of advertisement data, associated with the video data, at the any relative playback time point comprises:
when the video data is playing at the any relative playback time point, acquiring, from the stored each piece of advertisement data, at least one piece of advertisement data, associated with the video data, at the any relative playback time point.

7. The method according to claim 5, wherein before the step of acquiring a relative playback time point, of each piece of advertisement data, in a playback process of video data that starts playing, the method further comprises:
downloading the video data from a server;
correspondingly, the acquiring a relative playback time point, of each piece of advertisement data, in a playback process of video data that starts playing comprises:
acquiring, from the server, the relative playback time point, of each piece of advertisement data, in the playback process of the video data that starts playing; and
correspondingly, the acquiring, when the video data is playing at any relative playback time point in the relative playback time points, at least one piece of advertisement data, associated with the video data, at the any relative playback time point comprises:
when the video data is playing at the any relative playback time point, acquiring, from the server, at least one piece of advertisement data, associated with the video data, at the any relative playback time point.

8. The method according to any one of claims 5 to 7, wherein the method further comprises:
when playback of the video data is paused or stopped, acquiring some or all advertisement data that is associated with the video data; and
superimposing, in a mosaic form on a page of video data corresponding to the pause or stop moment, prompt information of the some or all advertisement data.

9. The method according to claim 8, wherein the method further comprises:
receiving a selection instruction, input by a user, for prompt information of specified advertisement data in the prompt information of the some or all advertisement data; and
presenting, according to the selection instruction, extension information of advertisement data corresponding to the prompt information of the specified advertisement data.

10. The method according to claim 9, wherein the method further comprises:
receiving a selection instruction, input by the user, for a link to specified scene data, wherein the link to the specified scene data is comprised in the extension information of the advertisement data; and
switching, according to the selection instruction for the link to the specified scene data, the video data to the scene data corresponding to the link.

11. The method according to any one of claims 5 to 10, wherein the superimposing, on a page of the video data, prompt information of the at least one piece of advertisement data specifically comprises:
superimposing and presenting the prompt information of the at least one piece of advertisement data; or
superimposing the prompt information of the at least one piece of advertisement data; and when an operation focus of the user is located on the prompt information of the advertisement data, presenting the prompt information, on which the operation focus is located, of the advertisement data.

12. A terminal, comprising:
a first receiving unit, configured to: when video data is playing, receive a triggering instruction for pausing or stopping;
a first acquiring unit, configured to acquire a relative playback time point at which the video data is playing when the first receiving unit receives the triggering instruction;
a second acquiring unit, configured to acquire at least one piece of advertisement data that comprises the relative playback time point acquired by the first acquiring unit and is associated with the video data; and
a first superimposing unit, configured to superimpose, on a page of video data corresponding to the relative playback time point, prompt information of the at least one piece of advertisement data acquired by the second acquiring unit.

13. The terminal according to claim 12, wherein
the first receiving unit is further configured to receive a selection instruction, input by a user, for prompt information of specified advertisement data in the prompt information of the at least one piece of advertisement data; and
the terminal further comprises:
a first presentation unit, further configured to present, according to the selection instruction received by the first receiving unit, extension information of advertisement data corresponding to the prompt information of the specified advertisement data.

14. The terminal according to claim 13, wherein
the first receiving unit is further configured to receive a selection instruction, input by the user, for a link to specified scene data, wherein the link to the specified scene data is comprised in the extension information of the advertisement data; and
the terminal further comprises:
a first switching unit, configured to switch, according to the selection instruction for the link to the specified scene data that is received by the first receiving unit, the video data to the scene data corresponding to the link.

15. A terminal, comprising:
a third acquiring unit, configured to acquire a relative playback time point, of each piece of advertisement data, in a playback process of video data that starts playing, wherein each piece of advertisement data and the video data are separately stored, and each piece of advertisement data and the video data are associated by using the relative playback time point of each piece of advertisement data;
a fourth acquiring unit, configured to acquire, when the video data is playing at any relative playback time point in the relative playback time points acquired by the third acquiring unit, at least one piece of advertisement data, associated with the video data, at the any relative playback time point; and
a second superimposing unit, configured to superimpose, on a page of the video data, prompt information of the at least one piece of advertisement data when the video data is playing.

16. The terminal according to claim 15, wherein the terminal further comprises:
a first downloading unit, configured to download the video data and each piece of advertisement data from a server; and
a storage unit, configured to store the video data and each piece of advertisement data that are downloaded by the first downloading unit;
the third acquiring unit is configured to acquire the relative playback time point of each piece of advertisement data from each piece of advertisement data stored by the storage unit; and
the fourth acquiring unit is configured to: when the video data is playing at the any relative playback time point, acquire, from each piece of advertisement data stored by the storage unit, at least one piece of advertisement data, associated with the video data, at the any relative playback time point.

17. The terminal according to claim 15, wherein the terminal further comprises:
a second downloading unit, configured to download the video data from a server;
the third acquiring unit is configured to acquire, from the server, the relative playback time point, of each piece of advertisement data, in the playback process of the video data that starts playing; and
the fourth acquiring unit is configured to: when the video data is playing at the any relative playback time point, acquire, from the server, at least one piece of advertisement data, associated with the video data, at the any relative playback time point.

18. The terminal according to any one of claims 15 to 17, wherein
the fourth acquiring unit is further configured to: when playback of the video data is paused or stopped, acquire some or all advertisement data that is associated with the video data; and
the second superimposing unit is further configured to superimpose, in a mosaic form on a page of video data corresponding to the pause or stop moment, prompt information of the some or all advertisement data.

19. The terminal according to claim 18, wherein the terminal further comprises:
a second receiving unit, configured to receive a selection instruction, input by a user, for prompt information of specified advertisement data in the prompt information of the some or all advertisement data; and
a second presentation unit, configured to present, according to the selection instruction received by the second receiving unit, extension information of advertisement data corresponding to the prompt information of the specified advertisement data.

20. The terminal according to claim 19, wherein
the second receiving unit is further configured to receive a selection instruction, input by the user, for a link to specified scene data, wherein the link to the specified scene data is comprised in the extension information of the advertisement data; and
the terminal further comprises:
a second switching unit, configured to switch, according to the selection instruction for the link to the specified scene data that is received by the second receiving unit, the video data to the scene data corresponding to the link.

21. A terminal, comprising: an input unit, a display unit, a processor, and a memory, wherein
the input unit is configured to: when video data is playing, receive a triggering instruction for pausing or stopping; and
the processor is configured to acquire a relative playback time point at which the video data is playing when the triggering instruction is received; acquire at least one piece of advertisement data that comprises the relative playback time point and is associated with the video data; and superimpose, on a page of video data corresponding to the relative playback time point, prompt information of the acquired at least one piece of advertisement data.

22. A terminal, comprising: an input unit, a display unit, a processor, and a memory, wherein
the processor is configured to: acquire a relative playback time point, of each piece of advertisement data, in a playback process of video data that starts playing, wherein each piece of advertisement data and the video data are separately stored, and each piece of advertisement data and the video data are associated by using the relative playback time point of each piece of advertisement data; acquire, when the video data is playing at any relative playback time point in the relative playback time points, at least one piece of advertisement data, associated with the video data, at the any relative playback time point; and superimpose, on a page of the video data, prompt information of the at least one piece of advertisement data when the video data is playing.

23. A data presentation system, comprising a terminal and a server, wherein
the server stores video data and advertisement data that is associatively stored with the video data; and
the terminal is the terminal according to any one of claims 12 to 14.

24. A data presentation system, comprising a terminal and a server, wherein
the server stores video data and advertisement data that is associated with the video data; and
the terminal is the terminal according to any one of claims 16 to 20.
